# EUROPEAN PATENT APPLICATION

(11) **EP 4 679 879 A1**
(43) Date of publication of application: **14.01.2026**
(21) Application number: 23926172.0
(22) Date of filing: 03.03.2023
(51) Int. Cl.: H04W 12/50

(54) **TERMINAL, NETWORK NODE DEVICE, AND COMMUNICATION METHOD**

(71) Applicant: NTT DOCOMO, INC., Tokyo 100-6150 (JP)
(72) Inventor: YAMAUCHI, Kenta, Tokyo 100-6150 (JP); MINOKUCHI, Atsushi, Tokyo 100-6150 (JP)
(74) Representative: Hoffmann Eitle
(86) International application number: PCT/JP2023/008042
(87) International publication number: WO 2024/184956

(57) **Abstract**

A terminal includes: a reception unit configured to receive, from another terminal, a second terminal machine identification number; and a transmission unit configured to, in a registration procedure, transmit a first terminal machine identification number and the second terminal machine identification number to a network node apparatus.

## Description

### Technical Field

The present invention relates to a terminal, a network node apparatus, and a communication method.

### Background Art

In NR (New Radio) (to be also referred to as "5G"), which is the successor to LTE (Long Term Evolution), a network architecture is being studied that includes a 5GC (5G Core Network), corresponding to the EPC (Evolved Packet Core) that is the core network in the LTE architecture, and an NG-RAN (Next Generation Radio Access Network), corresponding to the E-UTRAN (Evolved Universal Terrestrial Radio Access Network) that is the RAN in the LTE architecture (see, for example, Non-Patent Literature 1 and 2).

In the core network in NR, CU separation for separating a U-Plane function for executing a transmission and reception process of user data and a C-Plane function for executing a series of control processes for establishing communication and the like has been standardized.

In addition, it is assumed that various human machine interfaces (HMIs) are used in 6G. Even a personally owned terminal may use an HMI suitable for conveying a special feeling. In addition, there is a case where a shared HMI in a public urban space is used instead of the personally owned terminal.

### Citation List

### Non-Patent Literature

[Non-Patent Literature 1] 3GPP TS 23.501 V17.2.0 (2021-09)
[Non-Patent Literature 2] 3GPP TS 23.502 V17.2.1 (2021-09)

### Summary of the Invention

### Solution to Problem

Regarding the above HMI, one configuration that can be envisaged is to apply CU separation to the terminal and employ an HMI best suited to each case. When the terminal is CU-separated, the user may retain one terminal (e.g., a device that handles C-plane functions) while not retaining the other terminal (e.g., a public display that handles U-plane functions). In that situation, the other terminal is susceptible to unauthorized use. However, current technology provides no means of preventing such unauthorized use.

That is, the conventional technique has a problem in that it is not possible to realize CU separation of a terminal that prevents unauthorized use.

The present invention has been made in view of the above circumstances, and an object of the present invention is to realize CU separation of a terminal that prevents unauthorized use.

### Means for Solving the Problem

According to an embodiment of the present invention, there is provided a terminal including:
a reception unit configured to receive, from another terminal, a second terminal machine identification number; and
a transmission unit configured to, in a registration procedure, transmit a first terminal machine identification number and the second terminal machine identification number to a network node apparatus.

### Advantageous Effects of Invention

According to the disclosed technique, it is possible to realize CU separation of a terminal that prevents unauthorized use.

### Brief Description of the Drawings

[Fig. 1] FIG. 1 is a diagram for explaining a radio communication system according to the present embodiment;
[Fig. 2] FIG. 2 is a diagram illustrating an example of a configuration of a core network according to the present embodiment;
[Fig. 3] FIG. 3 is a sequence diagram showing an example of an association establishment procedure according to the present embodiment;
[Fig. 4] FIG. 4 is a sequence diagram showing an example of an update procedure and a check procedure according to the present embodiment;
[Fig. 5] FIG. 5 is a sequence diagram illustrating an example of a flow of a PDU session establishment procedure according to the present embodiment;
[Fig. 6] FIG. 6 is a diagram illustrating an example of a configuration of a core network according to a modification of the present embodiment;
[Fig. 7] FIG. 7 is a diagram illustrating an example of a functional configuration of a base station according to the present embodiment;
[Fig. 8] FIG. 8 is a diagram illustrating an example of a functional configuration of a terminal according to the present embodiment;
[Fig. 9] FIG. 9 is a diagram illustrating an example of a hardware configuration of a base station or a terminal according to the present embodiment; and
[Fig. 10] FIG. 10 is a diagram illustrating an example of a configuration of a vehicle according to the present embodiment. Description of Embodiments

Hereinafter, the present embodiment will be described with reference to the drawings. The embodiments described below are examples, and embodiments to which the present invention is applied are not limited to the following embodiments.

In the operation of the radio communication system of the present embodiment, an existing technology may be used as appropriate. The existing technology is, for example, existing NR or LTE, but is not limited to existing NR or LTE. Furthermore, the term "LTE" used in the present specification has a broad meaning including LTE-Advanced and schemes (for example, NR) after LTE-Advanced unless otherwise specified.

In the present embodiment described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and signals, functions, and the like similar to these may be referred to by other names. The above-described terms in NR correspond to NR-SS, NR-PSS, NR-SSS, NR-PBCH, NR-PRACH, and the like. However, even a signal used for NR is not necessarily denoted by "NR-".

In the present embodiment, a duplex scheme may be a time division duplex (TDD) scheme, a frequency division duplex (FDD) scheme, or another scheme (for example, a flexible duplex scheme).

In the present embodiment, a radio parameter or the like being "configured" may mean that a predetermined value is configured in advance (Pre-configuration), or may mean that a radio parameter notified from a base station or a terminal is configured.

### (System Configuration)

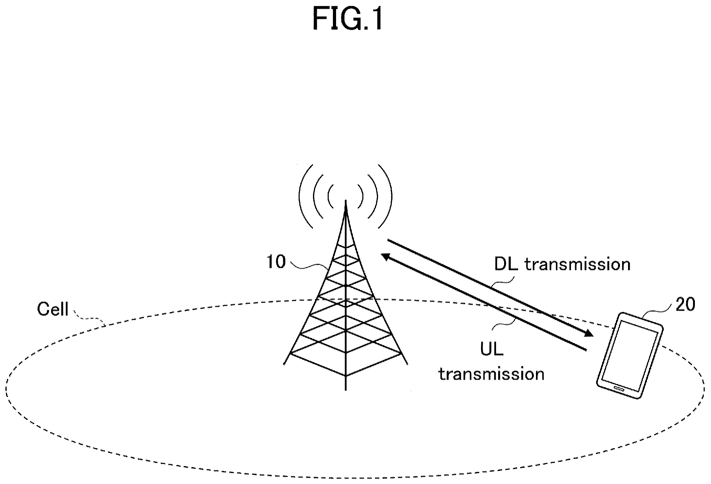

FIG. 1 is a diagram for explaining a radio communication system according to the present embodiment.

As shown in FIG. 1, the radio communication system according to the present embodiment includes a base station 10 and a terminal 20. Although FIG. 1 illustrates one base station 10 and one terminal 20, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain, and the time domain may be defined as orthogonal frequency division multiplexing (OFDM) and the frequency domain may be defined by the number of symbols, or may be defined by the number of subcarriers or the number of resource blocks. In addition, a transmission time interval (TTI) in the time domain may be a slot, or a TTI may be a subframe.

The base station 10 transmits a synchronization signal and system information to the terminal 20. The synchronization signal is, for example, an NR-PSS and an NR-SSS. The system information is transmitted, for example, on the NR-PBCH, and is also referred to as broadcast information. The synchronization signal and the system information may be referred to as an SS/PBCH block (SSB). As illustrated in FIG. 1, the base station 10 transmits a control signal or data to the terminal 20 on a downlink (DL), and receives a control signal or data from the terminal 20 on an uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell:Primary SCG Cell) of another base station 10 by dual connectivity (DC).

The terminal 20 is a communication apparatus having a radio communication function, such as a smartphone, a mobile phone, a tablet, a wearable terminal, and a communication module for M2M (Machine-to-Machine). As illustrated in FIG. 1, the terminal 20 receives a control signal or data from the base station 10 in the DL and transmits a control signal or data to the base station 10 in the UL, thereby using various communication services provided by the radio communication system. The terminal 20 receives various reference signals transmitted from the base station 10, and measures channel quality based on the reception result of the reference signal. Note that the terminal 20 may be referred to as a UE, and the base station 10 may be referred to as a gNB.

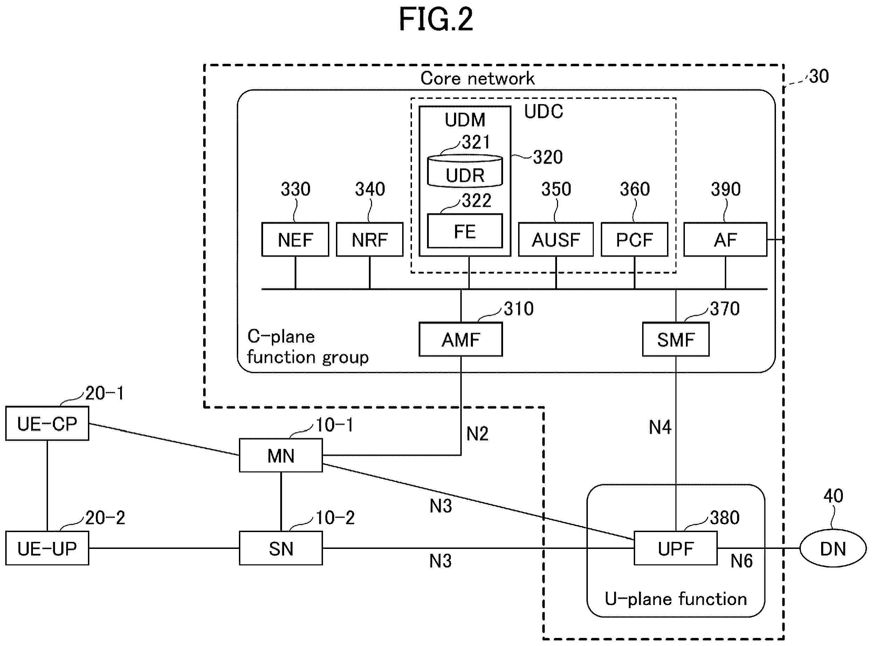

FIG. 2 is a diagram illustrating an example of a configuration of a core network according to the present embodiment. The radio communication system includes a master node (MN) 10-1, a secondary node (SN) 10-2, a UE-C-Plane (UE-CP) 20-1, a UE-U-Plane (UE-UP) 20-2, a core network 30, and a data network (DN) 40.

The UE-CP 20-1 and the UE-UP 20-2 are devices having hardware configurations equivalent to that of the terminal 20 respectively. The UE-CP 20-1 is a device that realizes a C-Plane function in the terminal. The UE-UP 20-2 is a device that realizes a U-Plane function in the terminal. The UE-CP 20-1 may be referred to as a terminal C-Plane unit. The UE-UP 20-2 may be referred to as a terminal U-Plane unit.

The MN 10-1 and the SN 10-2 may be apparatuses equivalent to base stations in a case where conventional dual connectivity (DC) is executed. The MN 10-1 and the SN 10-2 have functions corresponding to the UE-CP 20-1 and the UE-UP 20-2, respectively. That is, the MN 10-1 communicates with the UE-CP 20-1, and the SN 10-2 communicates with the UE-UP 20-2. Therefore, the MN 10-1 and the SN 10-2 may be configured to realize CU separation in base stations corresponding to CU separation in the terminal, and need not have a function of realizing conventional dual connectivity.

The core network 30 is a network including an exchange, a subscriber information management apparatus, and the like. The core network 30 includes a network node that realizes a U-Plane function and a network node group that realizes a C-Plane function group. The network node may be referred to as a network node apparatus.

The U-Plane function is a function of executing a transmission and reception process of user data. The network node that realizes the U-Plane function is, for example, a user plane function (UPF) 380. The UPF 380 is a network node having functions such as a protocol data unit (PDU) session point for the outside for interconnection with the DN 40, routing and forwarding of packets, and quality of service (QoS) handling of a user plane. The UPF 380 controls transmission and reception of data between the DN 40 and the UE-CP 20-1 or the UE-UP 20-2. The UPF 380 and the DN 40 may be made up of one or more network slices.

The C-Plane function group is a function group that executes a series of control processes for establishing communication and the like. The network node group that realizes the C-Plane function group includes, for example, an access and mobility management function (AMF) 310, a unified data management (UDM) 320, a network exposure function (NEF) 330, a network repository function (NRF) 340, an authentication server function (AUSF) 350, a policy control function (PCF) 360, a session management function (SMF) 370, and an application function (AF) 390.

The AMF 310 is a network node having functions such as termination of a RAN interface, termination of a non-access stratum (NAS), registration management, connection management, reachability management, and mobility management. The NRF 340 is a network node that has the capability to discover Network Functions (NFs) instances that provide services. The UDM 320 is a network node that manages subscriber and authorization information. The UDM 320 includes a user data repository (UDR) 321 and a front end (FE) 322. The FE 322 processes the subscriber information.

The SMF 370 is a network node having functions such as session management, IP (Internet Protocol) address assignment and management of the UE-CP 20-1 or the UE-UP 20-2, DHCP (Dynamic Host Configuration Protocol) functions, ARP (Address Resolution Protocol) proxy, roaming functions, and the like. The NEF 330 is a network node having functions of notifying other network functions (NFs) of capabilities and events. The PCF 360 is a network node having a function of performing policy control of a network.

The AF (Application Function) 390 is a network node having a function of controlling an application server.

The AMF 310 and the MN 10-1 are communicatively connected as a N2 link. The UPF 380, the MN10-1, and the SN 10-2 are connected as N3 links so as to be able to communicate with each other. The UPF 380 and the SMF 370 are communicatively connected as a N4 link. The UPF 380 and the DN 40 are communicatively connected as a N6 link.

Note that the number of UE-UP 20-2 corresponding to the UE-CP 20-1 may be two or more. For example, it may be envisaged to selectively employ multiple UE-UPs 20-2 according to the specific application.

In the present embodiment, an entity that communicates with the UE-CP 20-1 and the UE-UP 20-2, which are terminals, may be referred to as a network. The network may include the MN 10-1, the SN 10-2, and the core network 30.

### (About Problem)

With the above configuration, terminal CU separation is achieved. Here, the UE-UP 20-2 may be a terminal installed in a public area. For example, it can be considered that a UE-UP 20-2 is a display set up in a public area, and a user's smartphone functions as a UE-CP 20-1 to provide U-Plane communication to that display. Because a terminal placed in a public area cannot be managed directly by its administrator (the user), it faces a high risk of theft or similar incidents. Accordingly, a mechanism is required to prevent unauthorized use of the UE-UP 20-2 when such damage occurs.

The above problem is not limited to the case where the UE-UP 20-2 is installed in a public place, and may occur in all cases where the UE-CP 20-1 and the UE-UP 20-2 are used to perform the terminal CU separation.

### (Overview of Embodiment)

To address the above issue, in the present embodiment, the UE-CP 20-1 acquires, from the UE-UP 20-2, a terminal machine identification number of the UE-UP 20-2 (hereinafter referred to as second terminal machine identification number).

The UE-UP 20-2 transmits the second machine identification number to the AMF 310 in the registering procedure (for example, when mobility registration). The AMF 310 checks the second terminal machine identification number by an ME identity check procedure.

It should be noted that the terminal machine identification number of the UE-CP 20-1 is the first terminal machine identification number. Both the first terminal machine identification number and the second terminal machine identification number are, for example, an international mobile station equipment identity (IMEI) or an international mobile station equipment identity and software version number (IMEISV). However, the present invention is not limited thereto.

An example of a processing procedure for realizing the above operation will be described below.

### (Establishment of Association between UE-CP and UE-UP)

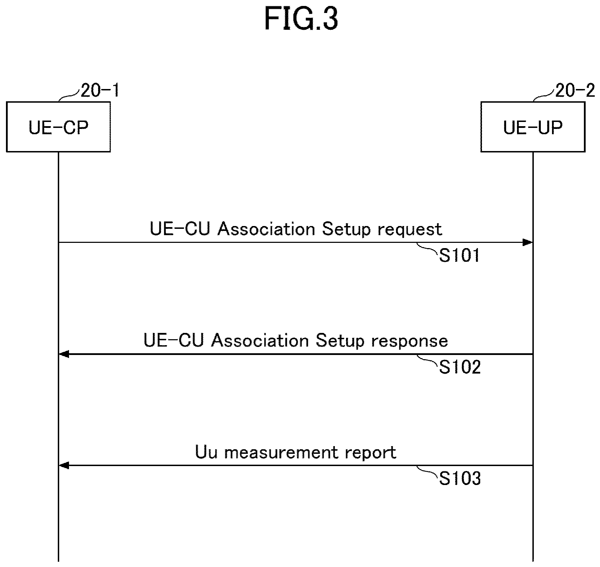

First, a procedure for establishing association between the UE-CP 20-1 and the UE-UP 20-2 will be described with reference to FIG. 3. Through this procedure, the UE-CP 20-1 obtains the second machine identification number.

FIG. 3 is a sequence diagram illustrating an example of a flow of an association setup procedure according to the present embodiment. The UE-CP 20-1 transmits a "UE-CU Association Setup" request to the UE-UP 20-2 (S101).

Here, the "UE-CU Association Setup" request includes a terminal Uu radio capability notification request, Uu measurement report configuration information, a terminal security capability notification request, and a terminal machine identification number request. The terminal Uu radio capability notification request is a request to notify the terminal Uu radio capability. The UE Uu radio capability is the radio capability of the UE-UP 20-2. The Uu measurement report configuration information is configuration information for Uu measurement report, and includes information for reporting Uu measurement to the UE-CP 20-1. The Uu measurement is a measurement of a radio communication state of the UE-UP 20-2 (a radio communication state between the UE and the base station). The terminal security capability notification request is a request for notifying a terminal security capability. The terminal security capability defines algorithms supported for encryption and integrity protection in the terminal. The terminal machine identification number request is a request to notify the terminal machine identification number to the UE-UP 20-2.

The UE-UP 20-2 transmits a "UE-CU Association Setup" response to the UE-CP 20-1 (S102). The "UE-CU Association Setup" response is a response including the terminal Uu radio capability of the UE-UP 20-2, the fact that the Uu measurement report for the UE-CP 20-1 is configured in the UE-UP 20-2, the terminal security capability of the UE-UP 20-2, and the terminal machine identification number (second terminal machine identification number) of the UE-UP 20-2.

Then, the UE-UP 20-2 transmits a Uu measurement report to the UE-CP 20-1 (S103), if applicable.

Note that the communication between the UE-CP 20-1 and the UE-UP 20-2 may or may not use a sidelink in NR, and may be, for example, radio communication according to a general communication standard. As a general communication standard, for example, Wifi (registered trademark), Bluetooth (registered trademark), or the like can be used.

### (Update Procedure and Check Procedure)

Next, an update procedure for updating the radio capability and the terminal security capability of the UE-CP 20-1 or the UE-UP 20-2 and a check procedure of the second machine identification number will be described.

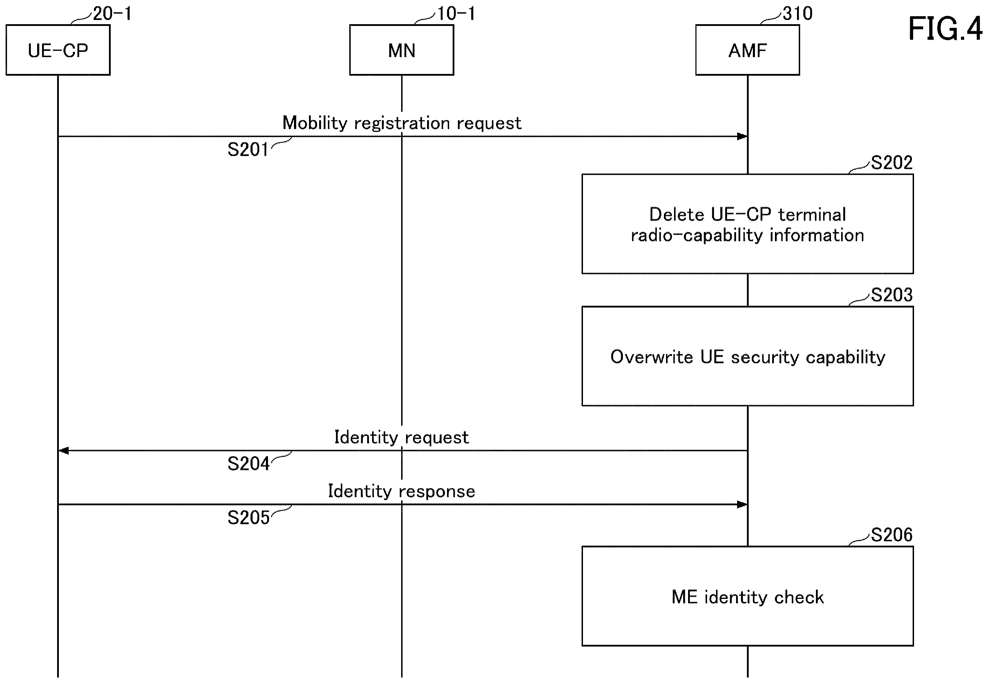

FIG. 4 is a sequence diagram illustrating an example of the update procedure and the check procedure. In FIG. 4, the AMF 310 pre-stores the terminal radio capability and the terminal security capability.

The UE-CP 20-1 transitions to the Idle mode and starts a mobility registration procedure in the same manner as a conventional terminal 20. The mobility registration procedure may be referred to as a registration procedure. In general, the registration procedure is a procedure for registering a terminal in a network in order to allow a user (terminal) to receive a service, to track the terminal when moving, or to perform communication.

Also, the registering procedure is a procedure executed when the terminal is initially registered in a 5GS, when the terminal moves from an area in which the terminal is registered to a new tracking area (TA), when it is necessary to update a function or a parameter of the terminal, and the like.

First, the UE-CP 20-1 transmits a mobility registration request to the AMF 310 (S201). The mobility registration request includes an information element indicating that the terminal radio capability has been updated (UE Radio Capability Update IE), an information element indicating the terminal security capability (UE Security Capability IE), and an information element in which identification information in the 5GS can be set (5GS mobile identity IE).

The UE Security Capability IE can be configured by distinguishing information indicating the terminal security capability for the UE-CP 20-1 (first terminal security capability) and information indicating the terminal security capability for the UE-UP 20-2 (second terminal security capability).

For the 5GS mobile identity IE, in addition to setting a 5G GUTI (Global Unique Temporary Identifier) and an SUCI (Subscription Concealed Identifier), the first terminal machine identification number for the UE-CP 20-1 and the second terminal machine identification number for the UE-UP 20-2 can be configured separately.

That is, in S201, the UE-CP 20-1 transmits a message (Registration request including 5GS mobile identity IE) including the first terminal machine identification number and the second terminal machine identification number to the AMF 310. However, assuming that at the time of the mobility Registration Request the UE-CP 20-1 may not transmit both the first and second terminal machine identification numbers (e.g., it may send only the first terminal machine identification number), the AMF 310 is arranged to transmit an Identity Request in S204, described later, when necessary.

The UE Security Capability IE indicates one or more ciphering algorithms and one or more integrity protection algorithms. The first terminal security capability and the second terminal security capability may respectively indicate a ciphering algorithm and an integrity protection algorithm.

The AMF 310 deletes the stored terminal radio capability information of the UE-CP 20-1 (S202).

If the AMF 310 determines that the prestored first terminal security capability is not changed from the first terminal security capability in the received UE Security Capability IE, the AMF 310 overwrites the prestored terminal security capability with the received terminal security capability IE (S203). In S203, the second terminal security capability stored in the AMF 310 may be updated, or both the first terminal security capability and the second terminal security capability may be updated.

After S203, if the AMF 310 confirms that the first terminal machine identification number and the second terminal machine identification number are received from the UE-CP 20-1, the process goes to S206 (ME identity check). More specifically, the following S204 is checked. Here, a case where an identity request is performed in S204 will be described.

In S204, when the AMF 310 does not receive the terminal machine identification number from the UE-CP 20-1 or the old AMF 310, or when the AMF 310 receives only one terminal machine identification number from the UE-CP 20-1 or the old AMF 310 even though it can be determined that the communication partner is the UE-CP 20-1 in the CU separation based on the configuration of the UE Radio Capability Update IE or the UE Security Capability IE, the AMF 310 transmits an identity request (terminal machine identification number request) to the UE-CP 20-1.

In step S205, the UE-CP 20-1 transmits to the AMF 310 an Identity Response (terminal machine identification number response) that includes the first terminal machine identification number for the UE-CP 20-1 and the second terminal machine identification number for the UE-UP 20-2.

In S206, the AMF310 initiates the ME identity check (terminal machine identification number check procedure) by invoking N5g-eir_EquipmentIdentityCheck_Get. Note that, the N5g-eir_EquipmentIdentityCheck_Get is extended to include a PEI (Permanent Equipment Identifier) of the UE-CP 20-1 and a PEI of the UE-UP 20-2. In this embodiment, the PEI of the UE-CP 20-1 is the first terminal machine identification number, and the PEI of the UE-UP 20-2 is the second terminal machine identification number.

In the terminal machine identification number checking procedure of S206, the AMF 310 checks whether both the first terminal machine identification number and the second terminal machine identification number are valid (registered in advance in a database) by referring to, for example, a database (for example, an Equipment Identity Register (EIR)) storing the terminal machine identification numbers, and completes the terminal machine identification number checking procedure when both the first terminal machine identification number and the second terminal machine identification number are confirmed to be valid.

Then, the AMF 310 returns a Registration Accept to the UE-CP 20-1. Also, the UE-CP 20-1 then initiates a service request procedure. The service request procedure may be a conventional procedure.

In S206, if the validity of either the first terminal machine identification number or the second terminal machine identification number, or both cannot be verified, the AMF 310 may return to the UE-CP 20-1 a message indicating that the registration procedure has failed (i.e., a message refusing the registration).

Although the foregoing example described the registration procedure (including the terminal machine identification-number verification procedure) for the case in which only one UE-UP 20-2 is present, a procedure the same as the registration procedure (including the terminal machine identification number checking procedure) can be applied when multiple UE-Ups 20-2 are paired with a single UE-CP 20-1. Specifically, by using information on several UE-Ups20-2 instead of the information on a single UE-UP 20-2 in each of the above steps, the registration procedure (including terminal machine identification-number checking procedure) can be executed for multiple UE-UPs 20-2.

### (Establishment (or Modification) of PDU Session)

Next, as an example of the operation related to the terminal CU separation in the present embodiment, a procedure of establishing (or modifying) a PDU session will be described.

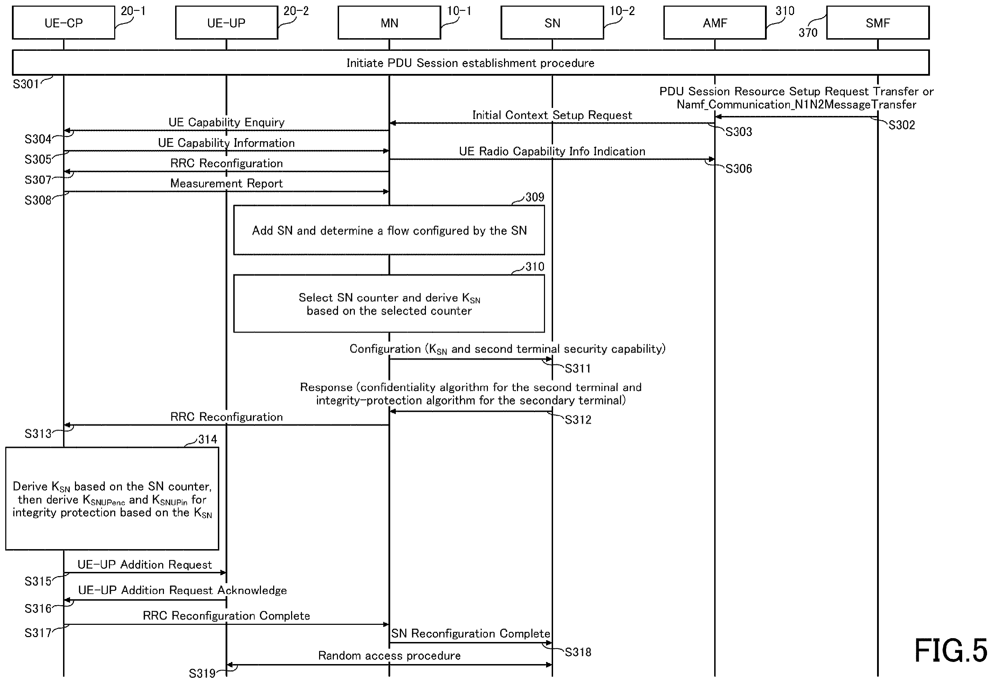

FIG. 5 is a sequence diagram illustrating an example of a flow of a PDU session establishment procedure according to the present embodiment.

The UE-CP 20-1 initiates the PDU session establishment procedure (or the PDU session modification procedure) (S301). The UE-CP 20-1 transmits a PDU Session Establishment Request message to the AMF 310 to initiate the PDU session establishment procedure.

The SMF 370 transmits
Namf_Communication_N1N2MessageTransfer including PDU Session Resource Setup Request Transfer or PDU Session Resource Modify Request Transfer including the MN-SN separation support information to the AMF 310 (S302). The MN-SN separation support information is information indicating a recommended mode of a method of dividing a flow between the MN 10-1 and the SN 10-2. The MN-SN separation support information may be included in the PDU Session Resource Modify Request Transfer.

The AMF 310 transmits an Initial Context Setup Request to the MN 10-1 (S303). The Initial Context Setup Request includes information indicated in the PDU Session Resource Setup Request Transfer or the Namf_Communication_N1N2MessageTransfer. The Initial Context Setup Request does not include information indicating the terminal radio capability. The Initial Context Setup Request includes information indicating a terminal security capability. The Initial Context Setup Request is used instead of the Namf_Communication_N1N2MessageTransfer.

The MN 10-1 initiates the terminal capability transfer procedure. The MN 10-1 transmits a UECapabilityEnquiry message to the UE-CP 20-1 (S304). The UECapabilityEnquiry message is a message requesting transmission of terminal radio capability information, and may be the same as that of the conventional terminal 20.

### The UE-CP 20-1 transmits a

UECapabilityInformation message to the MN 10-1 (S305). The UECapabilityInformation message is a message indicating terminal radio capability information. The UECapabilityInformation message includes a first terminal radio capability indicating the terminal radio capability of the UE-CP 20-1 and a second terminal radio capability indicating the terminal radio capability of the UE-UP 20-2.

The MN 10-1 stores the received information indicating the first terminal radio capability and the second terminal radio capability.

The MN 10-1 transmits a UE Radio Capability Info Indication message to the AMF 310 (S306). The UE Radio Capability Info Indication message indicates terminal capability information including the first terminal radio capability and the second terminal radio capability.

The MN 10-1 transmits RRC Reconfiguration including MeasurementConfig to the UE-CP20 - 1 (S307). MeasurementConfig indicates information of a received signal measurement configuration of the UE CP20 - 1. The UE CP20 - 1 measures the Reference Signal Received Power (RSRP) or the Reference Signal Received Quantity (RSRQ) of the received signal based on the MeasurementConfig.

### The UE-CP 20-1 transmits a

MeasurementReport message to the MN 10-1 (S308). The MeasurementReport includes a first measurement result indicating a measurement result of the UE-CP 20-1 and a second measurement result indicating a measurement result of the UE-UP 20-2.

The MN 10-1, on the basis of the MN-SN separation assistance information, the first terminal radio capability, the second terminal radio capability, the first measurement result, the second measurement result, and the like obtained from the UE-CP 20-1, adds SN 10-2 and determines the flow configured by the SN 10-2 (S309).

MN10-1 selects the SN counter and enters the selected SN counter into the parameters of KgNB to derive KSN (S310). KgNB is a key used for confidentiality and integrity protection between the terminals and MN10 - 1. The KSN is a key used for confidentiality and integrity protection between the terminals and the SN10-2.

The MN 10-1 configures a flow of the SN 10-2 (S311). For example, the MN 10-1 transmits K_{SN} and the second terminal security capability to the SN 10-2 for flow configuration of the SN 10-2. The second terminal security capability indicates one or more ciphering algorithms and one or more integrity protection algorithms.

The SN 10-2 selects, from the received second-terminal security capability, a confidentiality algorithm and an integrity-protection algorithm for the second terminal, and transmits to the MN 10-1 a response that includes the selected confidentiality algorithm and integrity-protection algorithm for the second terminal (S312).

The MN 10-1 transmits RRC Reconfiguration to the UE-CP 20-1 (S313). The RRC Reconfiguration includes, in addition to the configuration information of the MN 10-1, configuration information of the SN 10-2 (for example, secondaryCellGroup IE), a confidentiality algorithm for the first terminal, an integrity protection algorithm for the first terminal, a confidentiality algorithm for the second terminal, an integrity protection algorithm for the second terminal, and an SN counter.

The UE-CP 20-1 derives K_{SN} based on the SN counter (S314). The UE-CP 20-1 derives the key K_{SNUPenc} for ciphering and the key K_{SNUPin} for integrity protection between the SN 10-2 and the UE-UP 20-2 based on the derived K_{SN}.

The UE-CP 20-1 transmits a UE-UP Addition Request to the UE-UP 20-2 (S315). The UE-UP Addition Request is a message indicating an addition request of the UE-UP 20-2. The UE-UP Addition Request includes configuration information of the SN 10-2 (e.g., secondaryCellGroup IE), K_{UPene}, K_{UPin}, the confidentiality algorithm for the second terminal, and the integrity protection algorithm for the second terminal. Here, a communication method between the UE-CP 20-1 and the UE-UP 20-2 is not limited to a communication method based on a specific technology (such as an NR sidelink), and may be any communication method.

The UE-UP 20-2 transmits a UE-UP Addition Request Acknowledge to the UE-CP 20-1 (S316). The UE-UP Addition Request Acknowledge is a message indicating the approval of the addition request of the UE-UP 20-2.

The UE-CP 20-1 transmits RRC Reconfiguration Complete to the MN 10-1 (S317). The RRC Reconfiguration Complete is a message indicating completion of RRC reconfiguration.

The MN 10-1 transmits SN Reconfiguration Complete to the SN 10-2 (S318). "SN Reconfiguration Complete" is a message indicating completion of reconfiguration of the SN 10-2.

The UE-UP 20-2 and the SN 10-2 perform a random access procedure (S319). After the connection between the UE-UP 20-2 and the SN 10-2, confidentiality and integrity-protection are performed.

### (Effects of Embodiment)

According to the present embodiment, the UE CP 20-1 acquires the second terminal machine identification number from the UE-UP 20-2, and transmits the first terminal machine identification number and the second terminal machine identification number to the AMF 310, and the AMF 310 accepts the registration when both the first terminal machine identification number and the second terminal machine identification number are confirmed. This prevents the UE-UP 20-2 from being used alone. That is, it is possible to prevent the UE-UP 20-2 from being used without authorization.

Further, according to the present embodiment, it is possible to perform concealment and integrity protection between the terminal U-Plane part and the network. According to the present embodiment, the UE-CP 20-1 obtains the terminal security capability of the UE-UP 20-2 from the UE-UP 20-2, and negotiates with the network by using the terminal security capability of the UE-UP 20-2. The UE-CP 20-1 notifies the UE-UP 20-2 of the confidentiality algorithm, the integrity-protecting algorithm, the key used for confidentiality, and the key used for integrity-protection. The UE-UP 20-2 performs the confidentiality and the integrity protection between the SN 10-2 and the UE-UP 20-2 based on the information notified by the UE-CP 20-1. The network separates the terminal security capability into a first terminal security capability for the UE-CP 20-1 and a second terminal security capability for the UE-UP 20-2, and processes them.

### (Modified Example)

In the above-described embodiment, an example in which the functions of the RAN 10 are separated in accordance with the terminal 20 has been described, but the RAN 10 may not be separated.

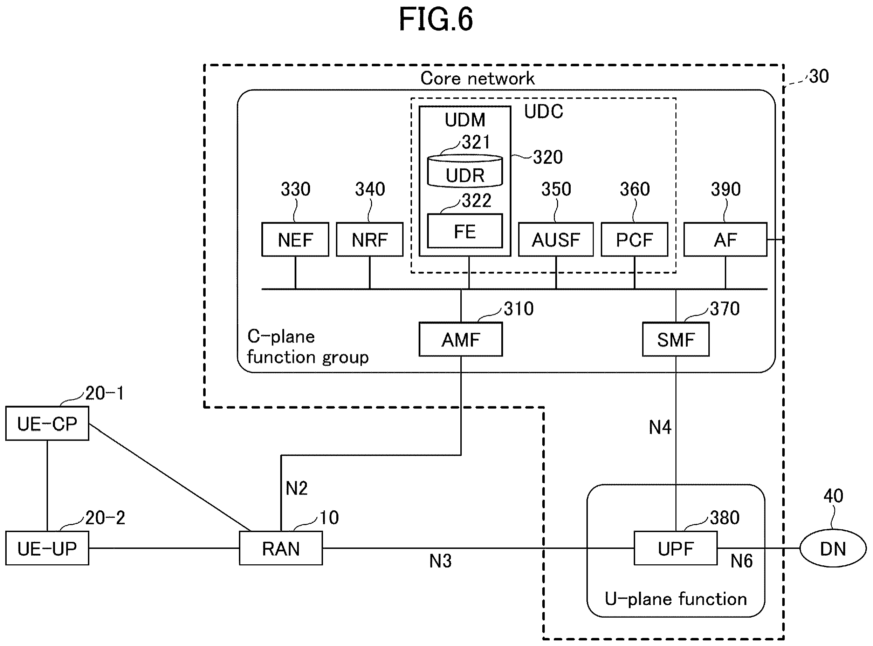

FIG. 6 is a diagram illustrating an example of a configuration of a core network according to a modified example of the present embodiment. In the present modified example, the RAN 10 is connected to the UE-CP 20-1 and the UE-UP 20-2 by radio communication. The RAN 10 performs both procedures of the UE-CP 20-1 and the UE-UP 20-2 in each of the above-described procedures. This enables CU separation of the terminal 20 without separating the RAN 10.

### (Apparatus Configuration)

Next, examples of functional configurations of the base station 10, the terminal 20, and various network nodes that perform the processes and operations described above will be described. The base station 10, the terminal 20, and various network nodes include functions for implementing the above-described embodiments. However, each of the base station 10, the terminal 20, and the various network nodes may include only some of the functions in the embodiments.

### <Base Station 10 and Network Node>

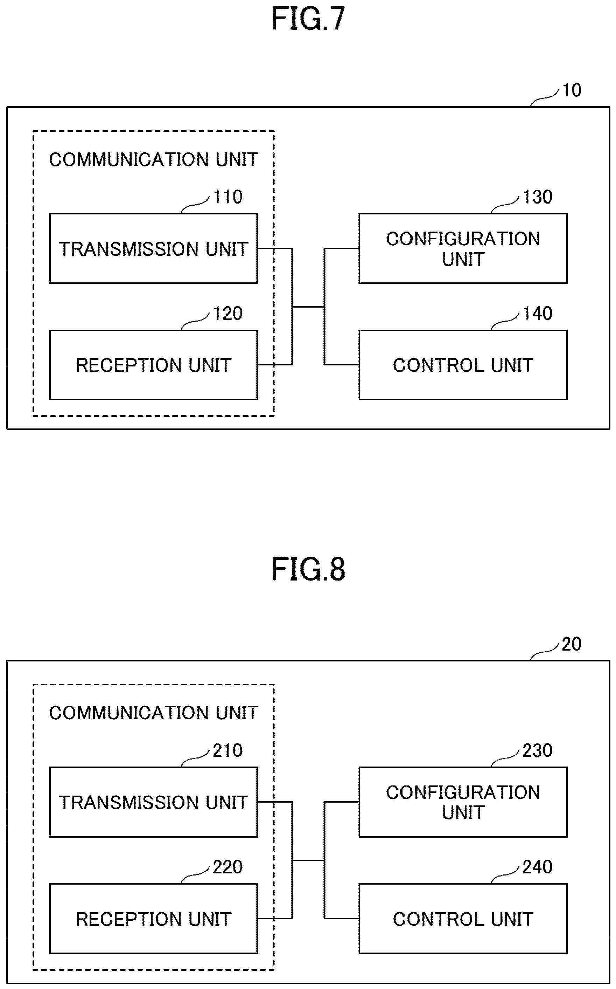

FIG. 7 is a diagram illustrating an example of a functional configuration of the base station 10. As illustrated in FIG. 7, the base station 10 includes a transmission unit 110, a reception unit 120, a configuration unit 130, and a control unit 140. The functional configuration illustrated in FIG. 7 is merely an example. As long as the operation according to the present embodiment can be performed, any functional division and any name of the functional unit may be used. Note that the network node may have a functional configuration similar to that of the base station 10. In addition, a network node having a plurality of different functions on the system architecture may be configured by a plurality of network nodes separated for each function.

The transmission unit 110 includes a function of generating a signal to be transmitted to the terminal 20 or another network node and transmitting the signal in a wired or wireless manner. The reception unit 120 includes a function of receiving various signals transmitted from the terminal 20 or another network node and acquiring, for example, information of a higher layer from the received signal.

The configuration unit 130 stores configuration information configured in advance and various types of configuration information to be transmitted to the terminal 20 in the storage device, and reads the configuration information from the storage device as necessary. The content of the configuration information is, for example, a configuration related to communication using NTN.

The control unit 140 controls the base station 10. The control unit 140 performs processing related to communication with the terminal 20. The functional unit related to signal transmission in the control unit 140 may be included in the transmission unit 110, and the functional unit related to signal reception in the control unit 140 may be included in the reception unit 120.

### <Terminal 20>

FIG. 8 is a diagram illustrating an example of a functional configuration of the terminal 20. As illustrated in FIG. 8, the terminal 20 includes a transmission unit 210, a reception unit 220, a configuration unit 230, and a control unit 240. The functional configuration illustrated in FIG. 8 is merely an example. As long as the operation according to the present embodiment can be performed, any functional division and any name of the functional unit may be used. The USIM worn by the terminal 20 may include the transmission unit 210, the reception unit 220, the configuration unit 230, and the control unit 240, similarly to the terminal 20. The terminal 20 may be the UE-CP 20-1 or the UE-UP 20-2.

The transmission unit 210 generates a transmission signal from transmission data and wirelessly transmits the transmission signal. The reception unit 220 wirelessly receives various signals and acquires a signal of a higher layer from the received signal of the physical layer. The reception unit 220 has a function of receiving the NR-PSS, the NR-SSS, the NR-PBCH, the DL/UL control signal, the reference signal, or the like transmitted from the network node. Both the transmission unit 210 and the reception unit 220 can perform terminal-to-terminal communication.

The configuration unit 230 stores various types of configuration information received from the network node by the reception unit 220 in the storage device, and reads the configuration information from the storage device as necessary. The configuration unit 230 also stores configuration information that is configured in advance.

The terminal and the base station of the present embodiment may be configured as the terminal and the base station shown in the following clauses. In addition, the following communication method may be implemented.

### <Configuration of Present Embodiment>

### (Item 1)

A terminal includes: a control unit that performs control processing, including establishing communication between a network and the terminal; a transmission unit that transmits to the network information indicating a security capability of another terminal that performs transmission and reception of user data; and a reception unit that receives from the network first information used for confidentiality and integrity protection of the other terminal, the first information being based on the information indicating the security capability of the other terminal, wherein the transmission unit further transmits the first information and second information which is used for confidentiality and integrity protection of the other terminal to the other terminal.

### (Item 2)

According to the terminal of item 1, the transmission unit transmits to the network both information indicating the security capability of the terminal and the information indicating the security capability of the other terminal.

### (Item 3)

According to the terminal of item 1, the first information includes a confidentiality algorithm used for confidentiality of the other terminal and an integrity-protection algorithm used for integrity protection, while the second information includes a confidentiality key and an integrity-protection key for the other terminal.

### (Item 4)

A base station includes: a reception unit that receives, from a first terminal performing control processing including establishment of communication, information indicating security capability of a second terminal that performs transmission and reception of user data; and a transmission unit that transmits to the first terminal first information, used for confidentiality and integrity protection of the second terminal, based on the information indicating the security capability of the second terminal.

### (Item 5)

A communication method executed by a terminal includes: a step of performing control processing, including establishment of communication between a network and the terminal; a step of transmitting to the network information indicating a security capability of another terminal that performs transmission and reception of user data; a step of receiving from the network first information used for confidentiality and integrity protection of the other terminal, the first information being based on the information indicating the security capability of the other terminal; and a step of transmitting the first information and second information used for confidentiality and integrity protection of the other terminal to the other terminal.

### (Item 6)

A radio communication system includes a first terminal, a second terminal, and a network. The first terminal performs control processing, including establishment of communication with the network, and transmits to the network information indicating the security capability of the second terminal, which performs transmission and reception of user data. The network transmits to the first terminal first information, used for confidentiality and integrity protection of the second terminal, based on the information indicating the security capability of the second terminal. The first terminal transmits the first information and second information-used for confidentiality and integrity protection of the second terminal-to the second terminal. After completion of connection between the network and the second terminal, the second terminal performs confidentiality and integrity protection between the second terminal and the network using the first information and the second information.

With any of the above configurations, confidentiality and integrity protection between the terminal U-Plane part and the network, which is previously unachievable with conventional CU-separation technology, can be realized. According to item 2, information indicating another terminal's security capability and information indicating its own security capability can be transmitted. According to item 3, the first information received by the terminal can include a confidentiality algorithm used for confidentiality of the other terminal and an integrity-protection algorithm used for ensuring integrity-protection, while the second information transmitted by the terminal can include the confidentiality key and integrity-protection key for the other terminal.

Further, according to the present embodiment, at least the following supplementary note is disclosed.

### <Supplementary Notes>

### [Clause 1]

A terminal including:
a reception unit configured to receive, from another terminal, a second terminal machine identification number; and
a transmission unit configured to, in a registration procedure, transmit a first terminal machine identification number and the second terminal machine identification number to a network node apparatus.

### [Clause 2]

The terminal as described in Clause 1,
wherein the transmission unit transmits, to the other terminal, a request message requesting establishment of association with the other terminal, and the reception unit receives a response message including the second terminal machine identification number.

### [Clause 3]

A network node apparatus including:
a reception unit configured to receive, in a registration procedure and from a first terminal, a first terminal machine identification number of the first terminal and a second terminal machine identification number of a second terminal; and
a control unit configured to check validity of the first terminal machine identification number and the second terminal machine identity number.

### [Clause 4]

The network node apparatus as described in Clause 3, further including:
a transmission unit configured to transmit, to the first terminal, a request for a terminal machine identification number,
wherein the reception unit receives, as a response to the request, the first terminal machine identification number and the second terminal machine identification number.

### [Clause 5]

A communication method executed by a terminal, the communication method including:
receiving, from another terminal, a second terminal machine identification number; and
in a registration procedure, transmitting a first terminal machine identification number and the second terminal machine identification number to a network node apparatus.

With any of Clauses 1 through 5, it is possible to realize CU separation of the terminal while preventing unauthorized use. According to Clause 2, the second terminal machine identification number can be obtained during the association-establishment procedure. According to Clause 4, the network node apparatus can obtain both the first terminal machine identification number and the second terminal machine identification number in response to a request to the first terminal.

### (Hardware Configuration)

The block diagrams (FIGS. 7 and 8) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

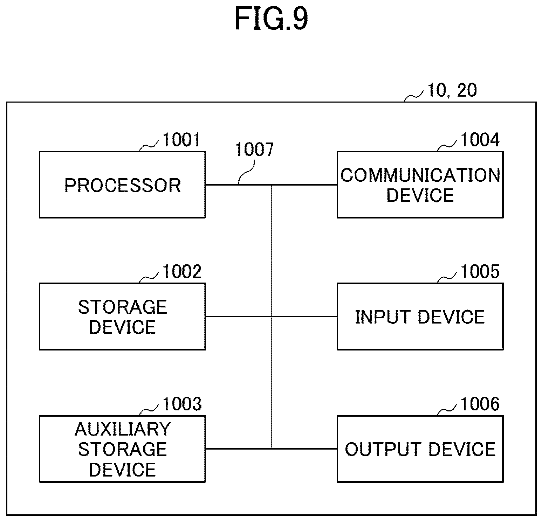

For example, the network node, and the terminal 20 and the like in one embodiment of this disclosure may function as a computer for performing the processing of a radio communication method of this disclosure. FIG. 9 is a diagram illustrating an example of a hardware configuration of the base station 10 and the terminal 20 and the like according to one embodiment of this disclosure. The network node may have the same hardware configuration as the base station 10. The USIM may have the same hardware configuration as the terminal 20. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 and the like may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 or the communication device 1004, and thus, executes various processing. A program for allowing a computer to execute at least a part of the operation described in the embodiment described above is used as the program. The control unit 140 of the base station 10 shown in Fig. 7 may be attained by a control program that is stored in the storage device 1002 and is operated by the processor 1001. Also, for example, the control unit 240 of the terminal 20 shown in Fig. 8 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network or a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

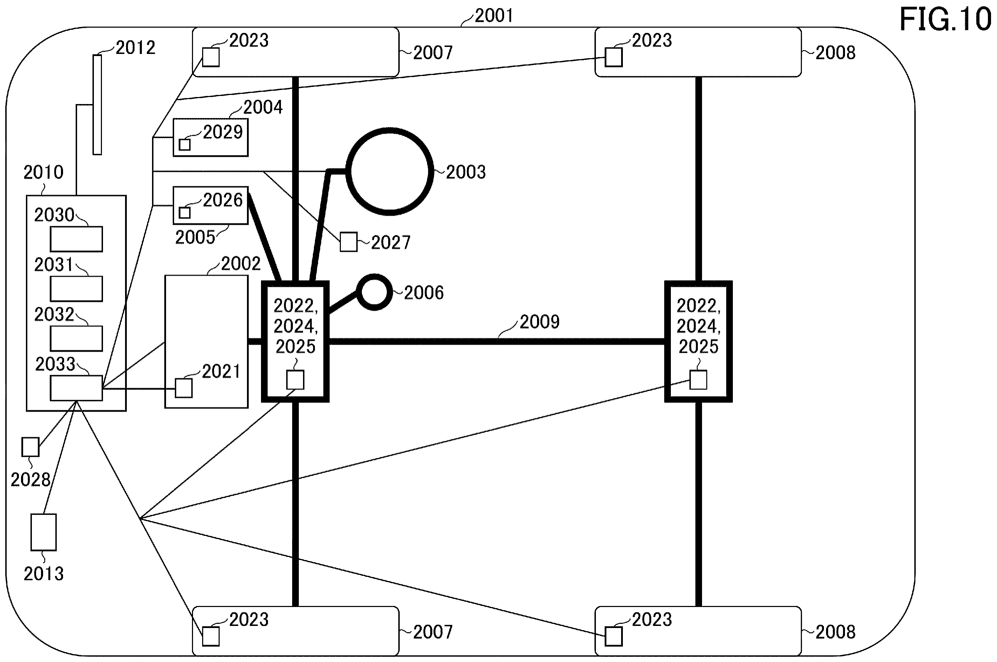

FIG. 10 shows a configuration example of a vehicle 2001 according to the present embodiment. As shown in FIG. 10, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspect/embodiment described in the present disclosure (the terminal 20 or the base station 10) may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits, via wireless communication, the current signal from a current sensor-input to the electronic control unit 2010-to an external device. The communication module 2013 also transmits, via wireless communication to the external device, the following signals that are input to the electronic control unit 2010: wheel-speed signals for the front and rear wheels obtained by wheel-speed sensor 2022; tire-pressure signals for the front and rear wheels obtained by tire-pressure sensor 2023; a vehicle-speed signal obtained by vehicle-speed sensor 2024; an acceleration signal obtained by acceleration sensor 2025; an accelerator-pedal depression-amount signal obtained by accelerator-pedal sensor 2029; a brake-pedal depression-amount signal obtained by brake-pedal sensor 2026; a shift-lever operation signal obtained by shift-lever sensor 2027; and detection signals for obstacles, vehicles, pedestrians, and the like obtained by object-detection sensor 2028.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement of Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G), xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultrawideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station (RAN)
10-1 MN
10-2 SN
110 transmission unit
120 reception unit
130 configuration unit
140 control unit
20 terminal
20-1 UE-CP
20-2 UE-UP
30 core network
40 DN
210 transmission unit
220 reception unit
230 configuration unit
240 control unit
310 AMF
320 UDM
330 NEF
340 NRF
350 AUSF
360 PCF
370 SMF
380 UPF
390 AF
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a reception unit configured to receive, from another terminal, a second terminal machine identification number; and
a transmission unit configured to, in a registration procedure, transmit a first terminal machine identification number and the second terminal machine identification number to a network node apparatus.

2. The terminal as claimed in claim 1,
wherein the transmission unit transmits, to the other terminal, a request message requesting establishment of association with the other terminal, and the reception unit receives a response message including the second terminal machine identification number.

3. A network node apparatus comprising:
a reception unit configured to receive, in a registration procedure and from a first terminal, a first terminal machine identification number of the first terminal and a second terminal machine identification number of a second terminal; and
a control unit configured to verify validity of the first terminal machine identification number and the second terminal machine identity number.

4. The network node apparatus as claimed in claim 3, further comprising:
a transmission unit configured to transmit, to the first terminal, a request for a terminal machine identification number,
wherein the reception unit receives, as a response to the request, the first terminal machine identification number and the second terminal machine identification number.

5. A communication method executed by a terminal, the communication method comprising:
receiving, from another terminal, a second terminal machine identification number; and
in a registration procedure, transmitting a first terminal machine identification number and the second terminal machine identification number to a network node apparatus.
